(19) Europäisches Patentamt
European Patent Office
Office européen des brevets

(11) **EP 2 889 613 A1**

(12) **EUROPEAN PATENT APPLICATION**
published in accordance with Art. 153(4) EPC

(43) Date of publication:
**01.07.2015 Bulletin 2015/27**

(21) Application number: **13830901.8**

(22) Date of filing: **19.08.2013**

(51) Int Cl.:
**G01N 29/04** *(2006.01)*

(86) International application number:
**PCT/JP2013/072117**

(87) International publication number:
**WO 2014/030615 (27.02.2014 Gazette 2014/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.08.2012 JP 2012182329**
**28.11.2012 JP 2012259955**

(71) Applicants:
• **IHI Corporation**
  **Tokyo 135-8710 (JP)**

• **Ihi Infrastructure Systems Co., Ltd**
  **Sakai-shi, Osaka 590-0977 (JP)**

(72) Inventors:
• **KURASHIGE, Arisa**
  **Tokyo 135-8710 (JP)**
• **HATANAKA, Hiroaki**
  **Tokyo 135-8710 (JP)**
• **KAWAI, Hiroki**
  **Tokyo 135-8710 (JP)**

(74) Representative: **Epping - Hermann - Fischer**
**Patentanwaltsgesellschaft mbH**
**Schloßschmidstraße 5**
**80639 München (DE)**

(54) **METHOD AND DEVICE FOR INSPECTING INTERFACE OF COMPOSITE STRUCTURE**

(57)　An interface inspection method according to the present invention includes a step S1 of transmitting ultrasound to a composite structure to be inspected, via an ultrasound generating unit adapted to generate ultrasound of a frequency suitable for a member making up the composite structure and acquiring a signal waveform by receiving a reflected wave from the composite structure using a receiving unit; a step S2 of performing signal processing on the acquired signal waveform and acquiring signal amplitude versus frequency characteristics; and a step S3 of determining an interface condition of the composite structure based on an amplitude in a frequency band unique to the composite structure as observed on the signal waveform subjected to signal processing.

FIG. 3

## Description

## Technical Field

The present invention relates to an interface inspection method and apparatus for a composite structure, and more particularly, to an interface inspection method and apparatus for inspecting an interface condition of a composite structure.

## Background Art

Generally, in relation to composite structures such as bridges, a method of construction is known which disposes reinforcement bars in a frame of a bottom steel plate provided with steel side plates and rigidly connected with an upper part of a main girder, pours concrete in the frame, and thereby constructs a composite slab. When the frame is filled with concrete, there are cases in which voids are produced in an interface between the bottom steel plate and concrete. If air does not come out of the voids completely and voids are left after the concrete hardens, there is fear that strength and durability of the composite structure may be reduced. Thus, there is demand for a method of inspecting a condition of the interface between the bottom steel plate and concrete before the placed concrete hardens.

Thus, a method is known for inspecting a concrete-filled condition of such a composite structure by inputting an electrical signal which changes continuously in a predetermined frequency range to a piezoelectric loudspeaker and detecting changes in position and magnitude of a peak voltage in frequency - voltage characteristics of the piezoelectric loudspeaker (see Patent Document 1).

## Prior Art Document

## Patent Document

Patent Document 1: Japanese Patent No. 3883466

## Summary of the Invention

## Problems to be solved by the Invention

However, the method disclosed in Patent Document 1 provides only local information because small piezoelectric sensors are used, allowing a filling condition of concrete to be grasped only at places where piezoelectric sensors are placed. Also, if one attempts to apply the method to a large composite structure such as a bridge, a large number of piezoelectric sensors are needed in order to obtain information about interface conditions of the entire composite structure, resulting in complicated construction conditions due to an increased number of cables as well as in increased inspection costs.

This is not desirable.

Also, when the inspection of filling condition is finished, there is troublesome after-treatment carried out to cut off the cables of the piezoelectric sensors extending outside from the interface between the bottom steel plate and concrete and bury the cables in the concrete and the like. Furthermore, the piezoelectric sensors used for inspection are thrown away and cannot be reused for inspection of other composite structures.

Also, once the concrete hardens, forming voids in the interface between the bottom steel plate and concrete, there is concern that water such as rain water will intrude the voids, corroding reinforcement members such as reinforcement bars and studs which reinforce the bottom steel plate and concrete. Once reinforcement members corrode, there is fear that the strength of the composite structure may be reduced. Thus, there is also demand for an inspection technique for identifying the presence or absence of trapped water in the voids formed in the interface of the composite structure between the bottom steel plate and concrete.

The present invention has been made in view of the above problems and has an object to provide an interface inspection method and apparatus capable of easily inspecting an interface condition in a desired part of a composite structure.

## Means for Solving the Problems

In order to achieve the above object, an aspect of the present invention is directed to providing an interface inspection method comprising the steps of: transmitting ultrasound to a composite structure to be inspected, via an ultrasound generating unit adapted to generate ultrasound of a frequency suitable for a member making up the composite structure and acquiring a signal waveform by receiving a reflected wave from the composite structure using a receiving unit; performing signal processing on the acquired signal waveform and acquiring signal amplitude versus frequency characteristics; and determining an interface condition of the composite structure based on an amplitude in a frequency band unique to the composite structure as observed on the signal waveform subjected to signal processing.

In the above-described step of performing signal processing, frequency analysis may be performed on the acquired signal waveform.

Alternatively, in the step of performing signal processing described above, the acquired signal waveform may be processed by a bandpass filter to pass specific frequency components of the signal waveform.

The interface condition described above may be a filling condition of fresh concrete in an interface of the composite structure made up of a steel plate and the fresh concrete.

Alternatively, the interface condition described above may be a condition of trapped water in an interface of the composite structure made up of a steel plate and hardened concrete.

An aspect of the present invention is directed to providing an interface inspection apparatus comprising: an ultrasound generating unit configured to apply ultrasound to a composite structure to be inspected, the ultrasound having a frequency suitable for a member making up the composite structure; a receiving unit configured to receive a reflected wave from the composite structure and acquiring a signal waveform; a signal processing unit configured to perform signal processing on the signal waveform received by the receiving unit and acquiring signal amplitude versus frequency characteristics; and a determination unit configured to determine an interface condition of the composite structure based on an amplitude in a frequency band unique to the composite structure as observed on the signal waveform subjected to signal processing.

**Advantageous Effects of the Invention**

According to the present invention, the interface inspection method and apparatus applies ultrasound of a frequency suitable for the composite structure, performs signal processing by receiving a reflected wave from the composite structure, and determines the interface condition of the composite structure based on an amplitude in the frequency band unique to the composite structure. Consequently, the interface condition in a desired location of the composite structure can be inspected easily based on the amplitude in the frequency band unique to the composite structure, making it possible to grasp the interface conditions of the entire composite structure by inspecting the composite structure as a whole.

**Brief Description of the Drawings**

FIG. 1 is a schematic configuration diagram showing an interface inspection apparatus for a composite structure, according to the present invention.

FIG. 2 is an enlarged view of a contact surface between a transmitter probe and a bottom steel plate as well as between a receiver probe and the bottom steel plate.

FIG. 3 is a flowchart showing an interface inspection method according to the present invention.

FIG. 4A is a graph showing flaw detection results when there is any void in an interface.

FIG. 4B is a graph showing flaw detection results when there is no void in an interface.

FIG. 5 is a flowchart showing a trapped water inspection method according to a variation of the embodiment of the present invention.

FIG. 6 is a schematic diagram of an interface inspection conducted in examples 1 and 2.

FIG. 7A is a graph showing signal processing results of a flaw detection waveform just after a steel plate with a simulated void formed therein is filled with concrete.

FIG. 7B is a graph showing signal processing results of a flaw detection waveform just after a steel plate with no simulated void formed therein is filled with concrete.

FIG. 8A is a graph showing signal processing results of a flaw detection waveform 180 minutes after a steel plate with a simulated void formed therein is filled with concrete.

FIG. 8B is a graph showing signal processing results of a flaw detection waveform 180 minutes after a steel plate with no simulated void formed therein is filled with concrete.

FIG. 9A is a graph showing flaw detection results after hardening of concrete filled into a steel plate with a simulated void formed therein.

FIG. 9B is a graph showing signal processing results of a flaw detection waveform after hardening of concrete filled into a steel plate with a simulated void formed therein.

FIG. 9C is a graph showing flaw detection results after hardening of concrete filled into a steel plate with no simulated void formed therein.

FIG. 9D is a graph showing signal processing results of a flaw detection waveform after hardening of concrete filled into a steel plate with no simulated void formed therein.

FIG. 10 is a schematic diagram of a trapped water inspection conducted in example 3.

FIG. 11A is a graph showing flaw detection results when water is trapped in a void portion after hardening of concrete filled into a steel plate with a simulated void formed therein.

FIG. 11B is a graph showing results produced by performing signal processing on a flaw detection waveform of FIG. 11A.

FIG. 11C is a graph showing flaw detection results after hardening of concrete filled into a steel plate with a simulated void formed therein.

FIG. 11D is a graph showing results produced by performing signal processing on a flaw detection waveform of FIG. 11C.

FIG. 12 is a schematic diagram of an interface inspection conducted on unfilled interface in example 4.

FIG. 13 is a schematic diagram of an interface inspection conducted in example 4 on a composite slab whose interface is filled.

FIG. 14A is a graph showing flaw detection results produced by performing ultrasonic flaw detection of a bottom steel plate not filled with concrete using a gel sheet as a contact medium.

FIG. 14B is a graph showing signal processing results of a flaw detection waveform of FIG. 14A.

FIG. 14C is a graph showing flaw detection results produced by performing ultrasonic flaw detection of a bottom steel plate using a gel sheet as a contact medium just after the bottom steel plate is filled with fresh concrete.

FIG. 14D is a graph showing signal processing results of a flaw detection waveform of FIG. 14C.

FIG. 14E is a graph showing flaw detection results produced by performing ultrasonic flaw detection of a bottom steel plate using a gel sheet as a contact medium 60 minutes after the bottom steel plate is filled with fresh concrete.

FIG. 14F is a graph showing signal processing results of a flaw detection waveform of FIG. 14E.

**Mode for Carrying out the Invention**

An embodiment of the present invention will be described below with reference to the drawings.

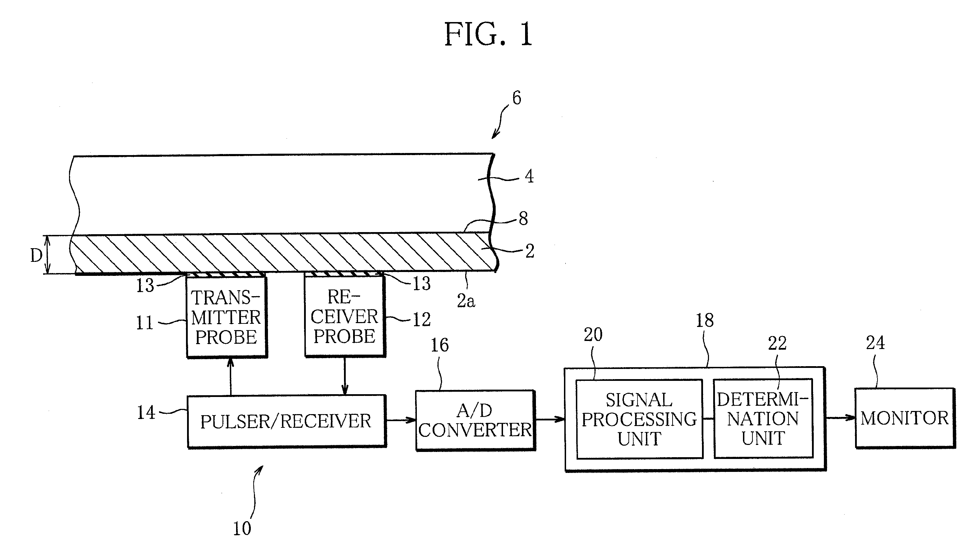

FIG. 1 is a schematic configuration diagram of an interface inspection apparatus for a composite structure, according to the present invention. The present embodiment will be described using a composite slab 6 made up of a bottom steel plate 2 and fresh concrete 4 as an example of the composite structure. The interface inspection apparatus 10 is an apparatus used to inspect the condition of an interface 8 between a bottom steel plate 2 and concrete 4 in a composite slab 6 made up of the bottom steel plate 2 and concrete 4 installed, for example, on upper part a bridge beam. Preferably thickness D of a steel plate used as the bottom steel plate 2 in the present invention is 1 to 100 mm, and more preferably 5 to 25 mm. The concrete 4 is concrete yet to be hardened, i.e., fresh concrete.

As shown in FIG. 1, the interface inspection apparatus 10 includes a transmitter probe (a vibration generating unit) 11, a receiver probe (a receiving unit) 12, a pulser/receiver 14, an analog-to-digital converter (hereinafter referred to as an A/D converter) 16, an arithmetic unit 18, and a monitor 24.

The transmitter probe 11 is connected to the pulser/receiver 14 adapted to transmit and receive ultrasound of a predetermined frequency and transmits the ultrasound of the frequency transmitted from the pulser/receiver 14 to the bottom steel plate 2. The pulser/receiver 14 inputs ultrasound of a frequency, which is set in a range of 20 kHz to 1 MHz, to the transmitter probe 11.

The receiver probe 12 is connected to the pulser/receiver 14 and receives a reflected wave reflected off the bottom steel plate 2. As shown in FIG. 1, the transmitter probe 11 and receiver probe 12 are placed at desired locations on an outer side of the bottom steel plate 2. As a contact medium 13 used to efficiently transmit ultrasound to the bottom steel plate 2, glycerin paste is applied to respective abutment points where the transmitter probe 11 and receiver probe 12 abut the bottom steel plate 2.

Note that as the contact medium 13 used to efficiently transmit ultrasound, a medium capable of transmitting ultrasound, such as a gel sheet made, for example, of a soft elastomer, may be used instead of the glycerin paste. When a gel sheet is used as the contact medium 13, the gel sheet has such hardness that the gel sheet will be deformable when pressed by the transmitter probe 11 and receiver probe 12, and preferably has, for example, Asker hardness of C30 or less. Also, regarding thickness of the gel sheet, even if the gel sheet get deformed and becomes thin by being pressed by the transmitter probe 11 and receiver probe 12, preferably the thinned part has a predetermined thickness. Furthermore, since elastomers have stable characteristics against changes in ambient temperature, the gel sheet provides a stable state of contact especially during the hot days of summer and during the cold days of winter regardless of the season of the year. Also, when a gel sheet is used as the contact medium 13, it only remains to remove the gel sheet and no special after-treatment is required. Also, preferably the gel sheet has a size substantially equal to the area of contact surfaces of the transmitter probe 11 and receiver probe 12 placed in contact with a contact surface 2a of the bottom steel plate 2 via the gel sheet.

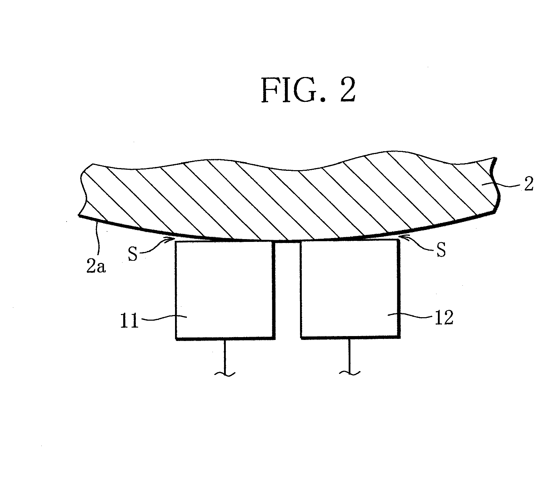

As shown in FIG. 2, if the contact surface 2a of the bottom steel plate 2 is distorted, a clearance S which is difficult to fill with a liquid contact medium such as glycerin paste may develop between the transmitter probe 11 and the contact surface 2a as well as between the receiver probe 12 and the contact surface 2a. When a gel sheet is used in such a case as the contact medium 13, the clearance S can be filled with the gel sheet, making it possible to transmit ultrasound and receive reflected wave while improving responsiveness of the transmitter probe 11 and receiver probe 12 to the contact surface 2a, and thereby maintain inspection accuracy. Note that if the transmitter probe 11 and receiver probe 12 are further downsized, the area of contact with the contact surface 2a of the bottom steel plate 2 becomes smaller, making it possible, needless to say, to minimize formation of the clearance S even if the contact surface 2a is distorted.

The reflected wave received by the receiver probe 12 is converted into an electrical signal by the pulser/receiver 14. The reflected wave converted to the electrical signal is converted into a digital signal by the A/D converter 16 and subjected to signal processing by the arithmetic unit 18. Specifically, the arithmetic unit 18 includes a signal processing unit (a signal processing unit) 20 and determination unit (a determination unit) 22, of which, the signal processing unit 20 performs frequency analysis of the reflected wave and displays analysis results on the monitor 24. The determination unit 22 determines the condition of the interface 8 between the bottom steel plate 2 and concrete 4 in the composite slab 6 based on the reflected wave subjected to the analysis process by the signal processing unit 20. Note that although not illustrated, the arithmetic unit 18 may include a notification unit and may give a notice using the notification unit according to determination results produced by the determination unit 22. Also, although not illustrated, the arithmetic unit 18 includes memories such as a ROM and RAM, and a threshold and the like described later are set in the memories.

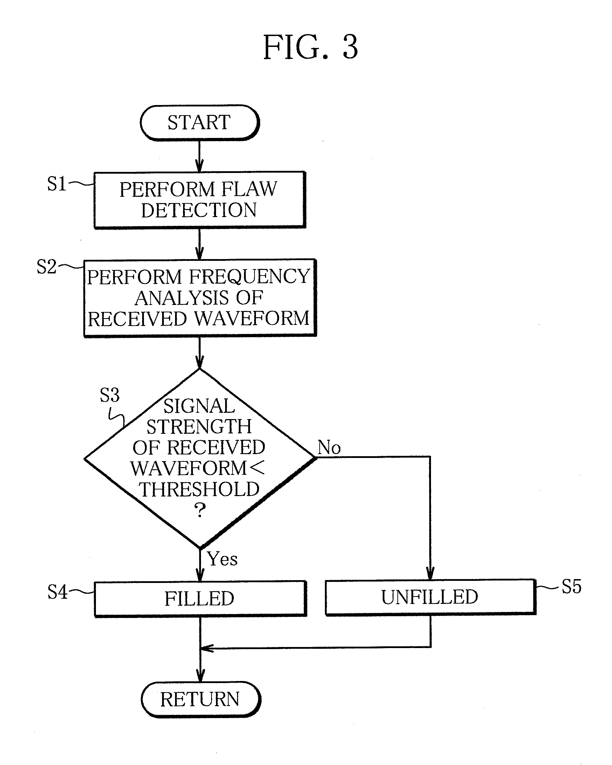

Description will be given below of an interface inspection method for inspecting the interface 8 of the composite slab 6 using the interface inspection apparatus 10 configured as described above. FIG. 3 shows a flowchart of the interface inspection method according to the present invention and the description will be given below based on the flowchart. Note that as preparation for the interface inspection method of the present invention, it is assumed that ultrasonic flaw detection has been performed using a steel plate of a same specification as the bottom steel plate 2 to be inspected and that flaw detection sensitivity of ultrasonic flaw detection has been set beforehand to the pulser/receiver 14. Also, processes of step S2 and subsequent steps described below are carried out by the arithmetic unit 18.

In step S1, ultrasonic flaw detection of the composite slab 6 is performed. Specifically, the transmitter probe 11 and receiver probe 12 are placed at desired locations on a lateral surface of the bottom steel plate 2, and the ultrasound is transmitted to the bottom steel plate 2 from the transmitter probe 11, and a reflected wave from the bottom steel plate 2 is received by the receiver probe 12. The frequency of the ultrasound used in this step is selected appropriately according to the thickness of the bottom steel plate 2.

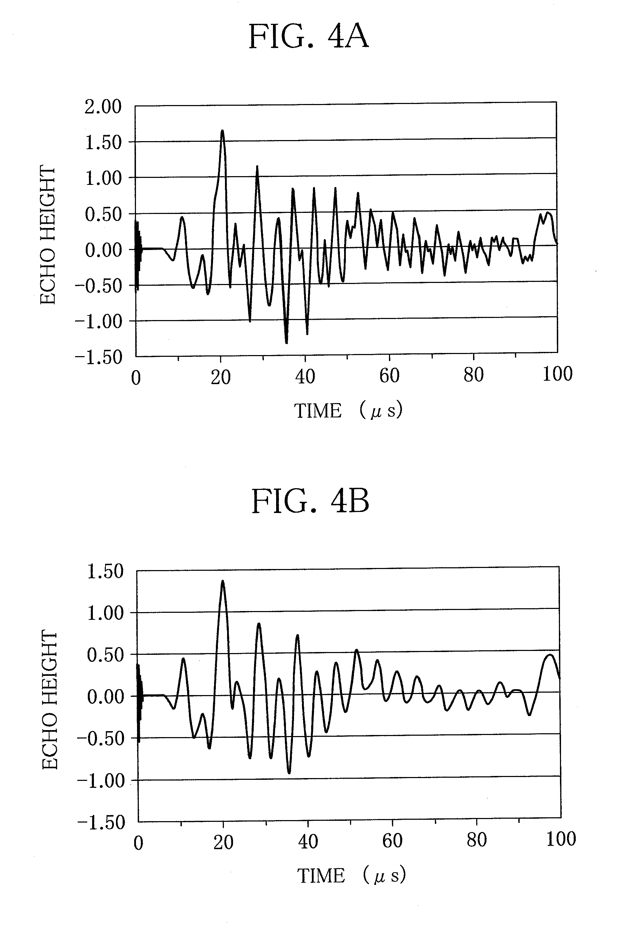

An example of waveforms obtained as a result of flaw detection in this step is shown in FIGS. 4A and 4B. FIG. 4A shows flaw detection results obtained when there is any void in the interface 8 and FIG. 4B shows flaw detection results obtained when there is no void in the interface 8. In FIG. 4A where there is a void in the interface 8, ultrasonic multiple reflections occur in the bottom steel plate 2, and a multiple reflection component appears as a reflected wave in the graph of the flaw detection results. On the other hand, in FIG. 4B which shows a flaw detection results in a sound area where there is no void in the interface 8, the graph is smoother than in FIG. 4A because even if ultrasonic multiple reflections occur in the bottom steel plate 2, part of the multiple reflection component escapes into the concrete.

In step S2, frequency analysis is performed on the reflected wave acquired in step S1 above. Specifically, the Fast Fourier Transform (hereinafter referred to as FFT) of a signal waveform of the reflected wave obtained in step S1 above is performed and a graph of frequency - amplitude characteristics is created. It can be confirmed from the graph that when there is any void in the interface 8 between the bottom steel plate 2 and concrete 4, amplitudes in a frequency band unique to the bottom steel plate 2 are larger than when there is no void. This is because if low-frequency ultrasound (frequency: 20 kHz to 1 MHz) is incident upon the interface 8 between the bottom steel plate 2 and concrete 4 when there is any void in the interface 8, the ultrasound propagates mainly as a Lamb wave (plate wave) by repeating multiple reflections, mode conversion, and interference in the bottom steel plate 2 without escaping into the concrete 4 and consequently components of the reflected wave are detected as the frequency of the ultrasound incident upon the bottom steel plate 2 and frequency components due to the interval of multiple reflection echoes of a longitudinal wave given by Eq. (1) below, i.e., the frequency band unique to the bottom steel plate 2. The frequency band unique to the bottom steel plate 2 is found from Eq. (1) below.

$$f = v / (2 \times t) \qquad (1)$$

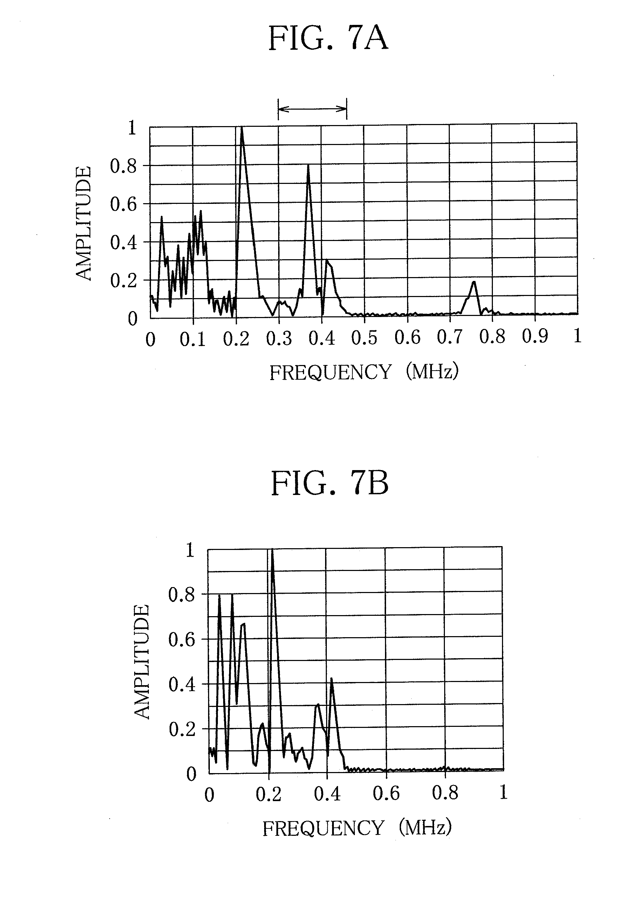

where f is the frequency band unique to the bottom steel plate 2, v is the sound velocity of the ultrasound propagating through the bottom steel plate 2, and t is the plate thickness of the bottom steel plate 2. An example of frequency analysis results in this step is shown in FIGS. 7A and 7B, and details will be described later.

In step S3, it is determined whether or not the magnitude of the amplitude in the specific frequency band according to the frequency analysis results obtained in step S2 above is smaller than a preset threshold. The threshold is a value at or above which it is determined that the interface 8 contains a void in excess of a tolerance. When the determination result is true (Yes), the arithmetic unit 18 goes to step S4. On the other hand, when the determination result is false (No), the arithmetic unit 18 goes to step S5. The specific frequency band used to determine the filled condition in this step is a unique frequency band which depends on the thickness of the bottom steel plate 2 to be inspected.

In step S4, since the amplitude in the specific frequency band according to the frequency analysis results obtained in step S2 above is smaller than the threshold, meaning that no void exists in the interface 8 between the bottom steel plate 2 and concrete 4 or that the size of the void existing in the interface 8 is within the tolerance, the flowchart is terminated by determining that the filled condition of the interface 8 is sufficient.

On the other hand, in step S5, since the amplitude in the specific frequency band according to the frequency analysis results obtained in step S2 above is equal to or larger than the threshold, it is determined that the size of the void existing in the interface 8 between the bottom steel plate 2 and concrete 4 exceeds the tolerance, and the flowchart is terminated by determining that the filled condition of the interface 8 is insufficient.

The reason why the filled condition of the interface 8 can be identified by carrying out steps S1 to S5 described above is as follows. That is, when fresh concrete exists on the bottom steel plate 2, part of a reflected component of the longitudinal wave passes into the fresh concrete. On the other hand, when no fresh concrete exists on the bottom steel plate 2, the reflected component of the longitudinal wave repeats multiple reflections in the bottom steel plate 2. Thus, by noting the reflected component of the frequency found from Eq. (1) above, it is possible to ascertain and identify a filled/unfilled state on the bottom steel plate 2 with fresh concrete 4 by carrying out each of the steps described above.

In this way, according to the present embodiment, ultrasonic flaw detection of the composite slab 6 is performed by placing the ultrasound probes 11 and 12 at desired locations on the bottom steel plate 2, the magnitude of the amplitude in a specific frequency band is compared with a threshold by performing frequency analysis of a received waveform, and the filled condition of the interface 8 with concrete 4 is determined. Consequently, since a desired part of the interface 8 can be inspected, the filled condition of the entire interface 8 can be grasped by inspecting the entire composite slab 6. Also, since frequency - amplitude characteristics can be obtained by performing frequency analysis on a received signal obtained by ultrasonic flaw detection, the condition of the interface 8 can be grasped easily by checking the magnitude of the amplitude in a specific frequency band.

Furthermore, if glycerin paste is used as a contact medium in a process after the end of interface inspection, it only remains to remove the glycerin paste applied to the respective abutment points at which the transmitter probe 11 and receiver probe 12 abut the bottom steel plate 2. Thus, the filled condition of the interface 8 can be inspected efficiently. The interface inspection method of the present invention uses ultrasonic probes, which can be used repeatedly for interface inspection of other composite slabs, making it possible to reduce inspection cost.

<Variation>

A variation of the interface inspection method according to the embodiment will be described below. The variation differs from the embodiment in that the void formed in the interface between the bottom steel plate and hardened concrete is inspected for trapped water using the interface inspection method described above. The rest of the configuration is in common with the embodiment, and thus description thereof will be omitted.

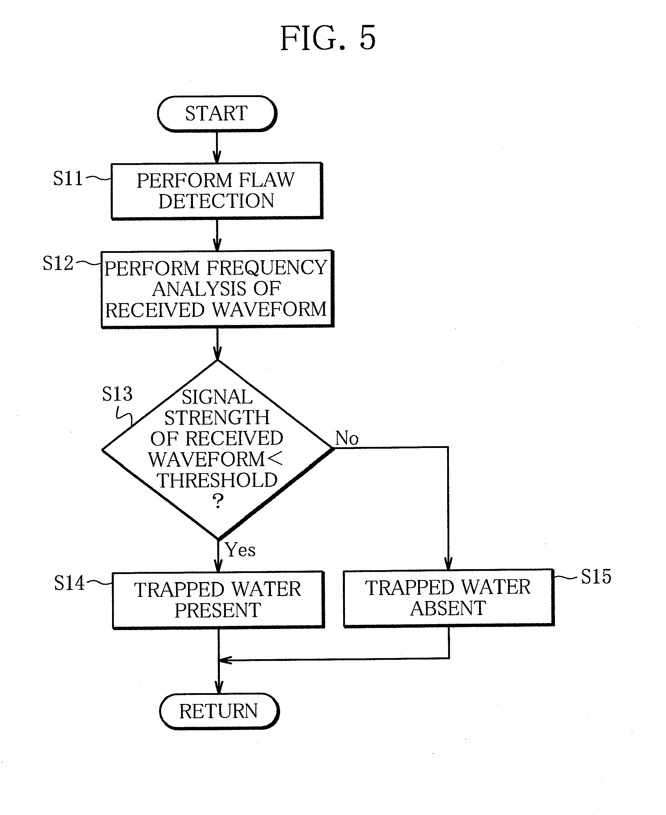

FIG. 5 is a flowchart by the application of the interface inspection method described above to a trapped water inspection. In this flowchart, steps S11 to S13 have same procedures as steps S1 to S3 of the interface inspection method described above while steps S14 and S15 concerning determination results are different from steps S4 to S5 described above. Thus, step S13, in which a determination is made, and subsequent steps will be described in this flowchart.

In step S13, it is determined whether or not the magnitude of the amplitude in the specific frequency band according to the frequency analysis results obtained in step S12 is smaller than a preset threshold. The threshold is a value at or above which it is determined that the interface 8 contains trapped water. When the determination result is true (Yes), the arithmetic unit 18 goes to step S14. When the determination result is false (No), the arithmetic unit 18 goes to step S15. The specific frequency band used to determine the condition of trapped water in this step is a unique frequency band which depends on the thickness of the bottom steel plate 2 to be inspected.

In step S14, since the amplitude in the specific frequency band according to the frequency analysis results obtained in step S12 above is smaller than the threshold, the flowchart is terminated by determining that there is a void in the interface 8 between the bottom steel plate 2 and hardened concrete and that water is trapped in the void.

On the other hand, in step S15, since the amplitude in the specific frequency band according to the frequency analysis results obtained in step S12 above is equal to or larger than the threshold, the flowchart is terminated by determining that although there is the void in the interface 8 between the bottom steel plate 2 and hardened concrete, water is not trapped in the void.

If water is trapped in the void formed in the interface 8 between the bottom steel plate 2 and hardened concrete, part of a reflected component of the longitudinal wave expressed by Eq. (1) described above passes into the trapped water. On the other hand, when there is no trapped water, the reflected component of the longitudinal wave repeats multiple reflections in the bottom steel plate 2. Thus, by noting the reflected component of the frequency found from Eq. (1) described above, it is possible to ascertain and identify the presence or absence of trapped water in the void formed in the interface 8 between the bottom steel plate 2 and hardened concrete by carrying out steps S11 to S15 described above. In this way, since the trapped water inspection method according to the present variation is based on the same principle as the interface inspection method according to the embodiment described above, the interface inspection method according to the embodiment described above can be applied to the trapped water inspection method according to the present variation.

[Examples]

The present invention will be described below by citing examples, but the present invention is not limited to the following examples.

<Example 1>

Using the interface inspection apparatus 10 according to the present invention, the interface inspection method described above was performed to inspect the filled condition of the interface 8 of the composite slab 6 filled with fresh concrete.

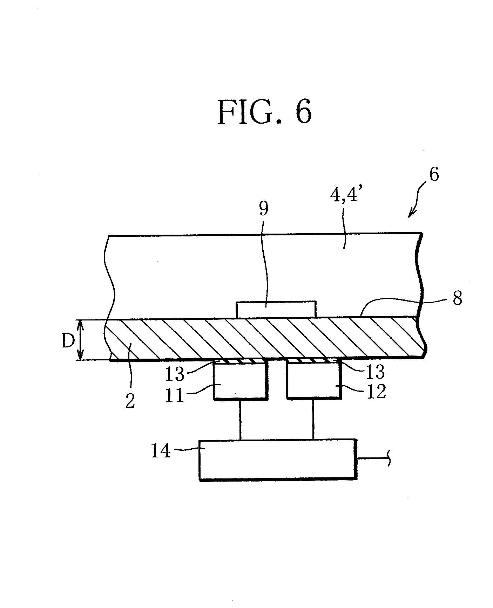

A schematic diagram of the interface inspection method performed in this example is shown in FIG. 6.

Ultrasonic flaw detection was performed by forming a simulated void 9 with a diameter of 100 mm in the interface 8 between the bottom steel plate 2 and fresh concrete 4 on the composite slab 6 and placing the transmitter probe 11 and receiver probe 12 on lateral surfaces of the bottom steel plate 2 on opposite sides of the simulated void 9. Here, the bottom steel plate 2 used was 8 mm in thickness D. The frequency of the ultrasound inputted to the transmitter probe 11 from the pulser/receiver 14 was 250 kHz and normal probes whose transducers had a diameter of 38.1 mm were used as the transmitter probe 11 and receiver probe 12. Also, as a comparative example, the interface inspection method described above was performed by preparing a composite slab 6 without forming the simulated void 9 therein. The bottom steel plate 2 and transmitter probe 11 had the same specifications as those described above, and the frequency of the ultrasound used for the interface inspection method was also the same as the one described above. Note that in both cases, before performing ultrasonic flaw detection, vibration was applied to the fresh concrete 4 with a vibrator to bleed the interface 8 of air and level out the surface of the fresh concrete 4. Also, glycerin paste was used as the contact medium 13.

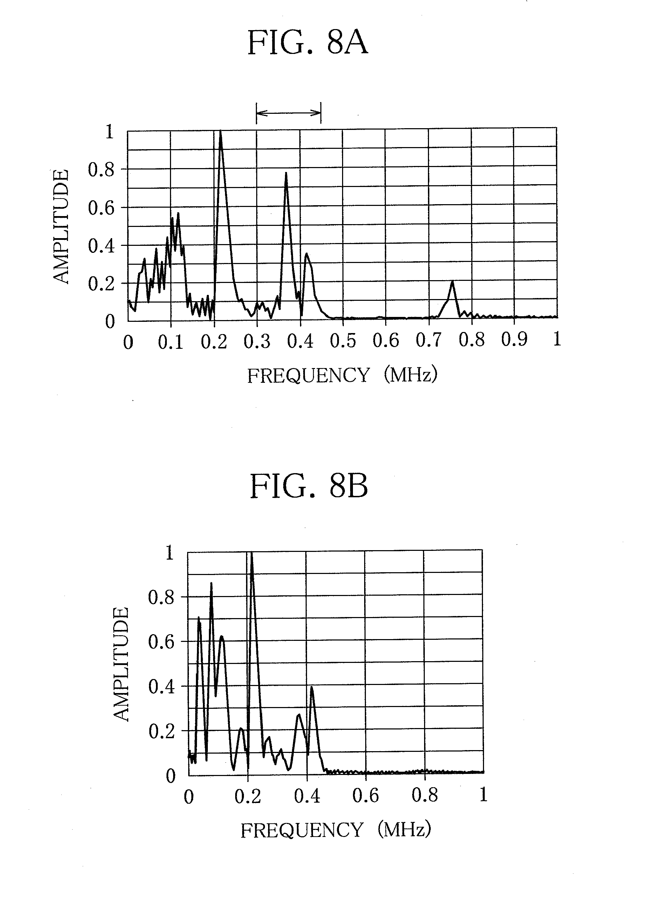

Results are shown in FIGS. 7A, 7B, 8A, and 8B. FIG. 7A is a graph showing signal processing results of a flaw detection waveform just after the bottom steel plate 2 with the simulated void 9 formed in the interface 8 is filled with fresh concrete 4, FIG. 7B is a graph showing signal processing results of a flaw detection waveform just after the bottom steel plate 2 in a sound area with no void formed in the interface 8 is filled with fresh concrete 4, FIG. 8A is a graph showing signal processing results of a flaw detection waveform 180 minutes after the bottom steel plate 2 with the simulated void 9 existing in the interface 8 is filled with fresh concrete 4, and FIG. 8B is a graph showing signal processing results of a flaw detection waveform 180 minutes after the bottom steel plate 2 in a sound area with no void in the interface 8 is filled with fresh concrete 4.

As shown in FIGS. 7A and 8A, in the graphs obtained by applying the above-described interface inspection method of the present invention to the composite slab 6 with the simulated void 9 formed in the interface 8, it can be seen that the amplitude is remarkably large in a frequency band range of 300 to 450 kHz. This is because the ultrasound multiply reflected off the bottom steel plate 2 appears in a frequency band of 300 to 450 kHz, which is the natural frequency band of the bottom steel plate 2, without escaping into the fresh concrete 4 due to the simulated void 9. (For example, if the sound velocity of the ultrasound propagating through the bottom steel plate 2 is v = 5920 [m/s], since the plate thickness of the bottom steel plate 2 is t = 8 [mm], the frequency band unique to the bottom steel plate 2 is found to be f = 370 [kHz] from Eq. (1) above).

On the other hand, as shown in FIGS. 7B and 8B, in the graphs obtained by applying the interface inspection method of the present invention to the composite slab 6 with the simulated void 9 not formed in the interface 8, it can be seen that no notable amplitude is observed in the frequency band range of 300 to 450 kHz. This is because since the simulated void 9 does not exist in the interface 8, the ultrasound multiply reflected in the bottom steel plate 2 escapes into the fresh concrete 4 and the multiple reflection component does not appear in the natural frequency band of the bottom steel plate 2.

In FIGS. 8A and 8B, the placed fresh concrete 4 hardens gradually with time, and it can be seen from FIG. 8A that when the simulated void 9 exists in the interface 8, even if the fresh concrete 4 hardens gradually, a peak appears in the frequency band of 300 to 450 kHz, allowing the simulated void 9 to be detected.

Thus, FIGS. 8A and 8B show that even if the condition of the fresh concrete 4 changes with time, the interface inspection method of the present invention can inspect the filled condition of the interface 8. In this way, it can be seen that the filled condition of the interface 8 can be grasped easily by inspecting the interface between the bottom steel plate 2 and fresh concrete 4 using the interface inspection method according to the present invention.

<Example 2>

Using the interface inspection apparatus 10 according to the present invention, the above-described interface inspection method according to the present invention was performed to inspect the filled condition of the interface 8 of the composite slab 6 filled with concrete. Note that this example differed from example 1 above in that the object to be inspected was a composite slab 6 made up of the bottom steel plate 2 and hardened concrete 4', but the rest of the configuration and the inspection conditions were the same as example 1 described above.

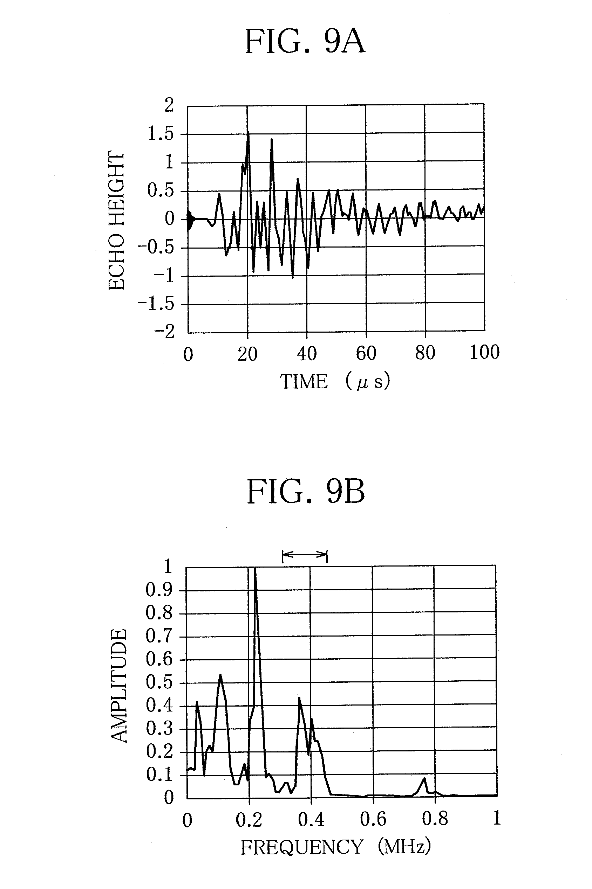

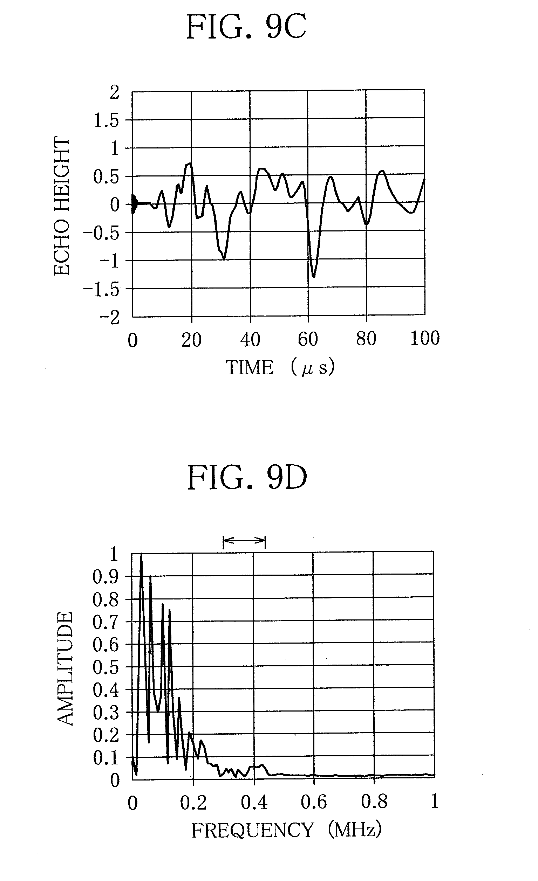

Survey results are shown in FIGS. 9A to 9D. FIG. 9A shows flaw detection results of a composite slab 6 with a simulated void 9 formed therein. FIG. 9B is a graph created by performing FFT on the waveform of FIG. 9A. FIG. 9C shows flaw detection results of a composite slab 6 with no simulated void 9 formed therein and FIG. 9D is a graph created by performing FFT on the waveform of FIG. 9C. Compared to FIG. 9D, it can be seen that in FIG. 9B, amplitudes appear in the frequency band of 300 to 450 kHz, which is the natural frequency band of the bottom steel plate 2, by being increased remarkably under the influence of multiple reflections in the bottom steel plate 2 caused by the simulated void 9. Thus, the interface inspection method of the present invention is applicable to interface inspection of hardened concrete.

<Example 3>

Using the interface inspection apparatus 10 according to the present invention, trapped water inspection of the interface 8 of a composite slab 6' filled with concrete was performed by the trapped water inspection method according to the above-described variation of the present variation.

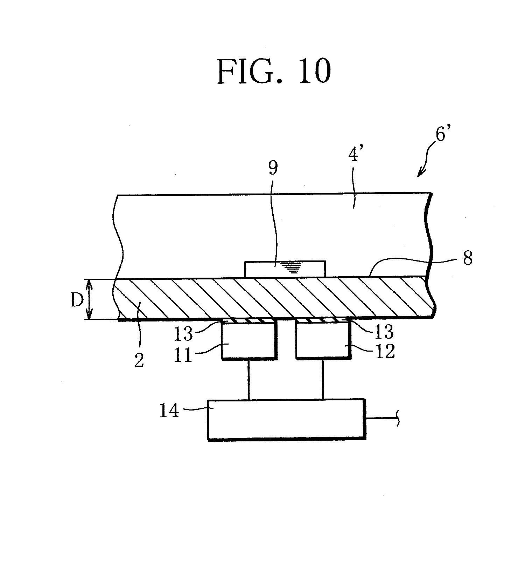

A schematic diagram of the trapped water inspection method performed in this example is shown in FIG. 10. A simulated void 9 with a diameter of 100 mm was formed in the interface 8 between the bottom steel plate 2 and hardened concrete 4' on the composite slab 6' and filled with water, creating a condition of trapped water. Ultrasonic flaw detection was performed by placing the transmitter probe 11 and receiver probe 12 on lateral surfaces of the bottom steel plate 2 on opposite sides of the simulated void 9. Here, the bottom steel plate 2 used was 8 mm in thickness D. The frequency of the ultrasound incident upon the bottom steel plate 2 as well as the diameters of the transmitter probe 11 and receiver probe 12 were the same as example 1 described above. Also, as a comparative example, a similar trapped water inspection was performed by preparing a composite slab 6 with a 100-mm-diameter simulated void 9 formed in the interface 8 between the bottom steel plate 2 and hardened concrete 4' as shown in FIG. 6.

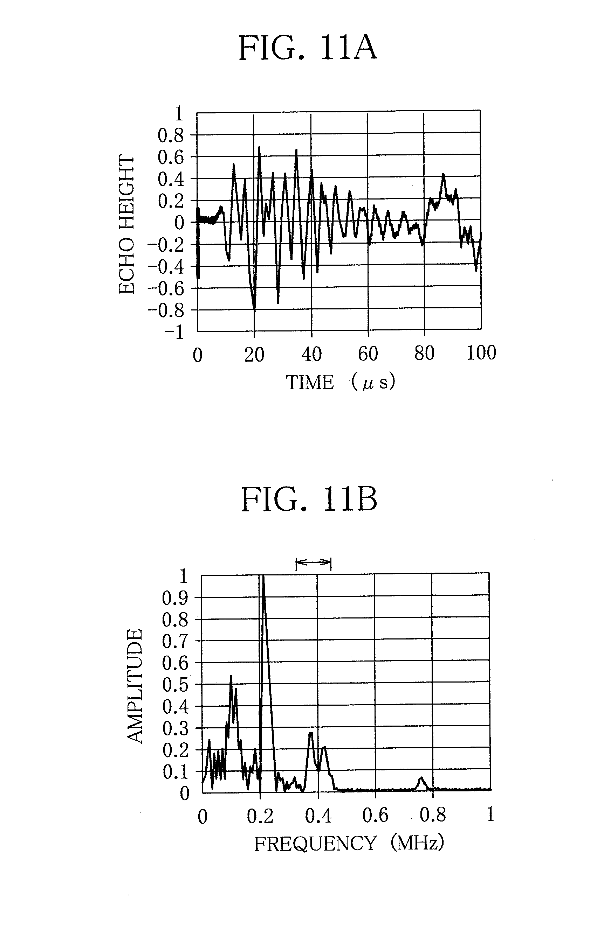

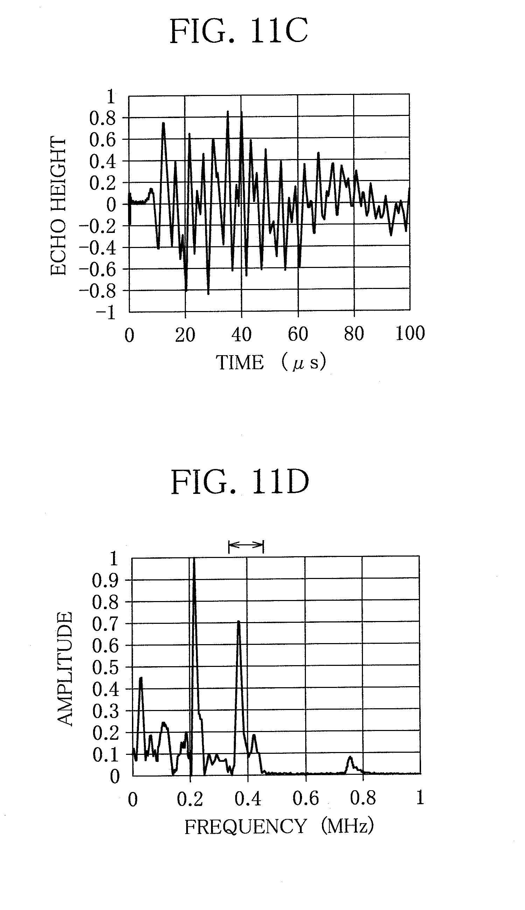

Results are shown in FIGS. 11A to 11D. FIG. 11A is a graph showing flaw detection results when water is trapped in a void portion of the simulated void 9 after hardening of concrete filled into the bottom steel plate 2 with the simulated void 9 formed therein, FIG. 11B is a graph showing results produced by performing signal processing on the flaw detection waveform of FIG. 11A, FIG. 11C is a graph showing flaw detection results after hardening of concrete filled into the bottom steel plate 2 with the simulated void 9 formed therein, and FIG. 11D shows a graph showing results produced by performing signal processing on the flaw detection waveform of FIG. 11C.

As shown in FIG. 11B, in the graph obtained by applying the interface inspection method of the present invention to the composite slab 6' with the simulated void 9 formed in the interface 8 and with water trapped in the simulated void 9, although amplitudes appear in the frequency band range of 300 to 450 kHz, no notable amplitude is observed. However, as shown in FIG. 11D, in the graph obtained by applying the interface inspection method of the present invention to the composite slab 6 with the simulated void 9 formed in the interface 8, it can be seen that the amplitude in the frequency band range of 300 to 450 kHz is remarkably increased compared to FIG. 11B.

When water is trapped in the simulated void 9 the ultrasound multiply reflected off the bottom steel plate 2 escapes into the water and consequently no notable amplitude is observed as with FIG. 11B, but when water is not trapped in the simulated void 9, i.e., when the simulated void 9 is empty, the ultrasound is multiply reflected off the bottom steel plate 2 as described above and thus a remarkably large amplitude appears as with FIG. 11D.

In this way, it can be seen that the interface inspection method of the present invention is applicable to trapped water inspection performed to identify the condition of trapped water in a void formed in the interface 8.

<Example 4>

Using the interface inspection apparatus 10 according to the present invention, the interface inspection method described in the above embodiment was performed to inspect the filled condition of the interface 8 of the composite slab 6 filled with fresh concrete 4.

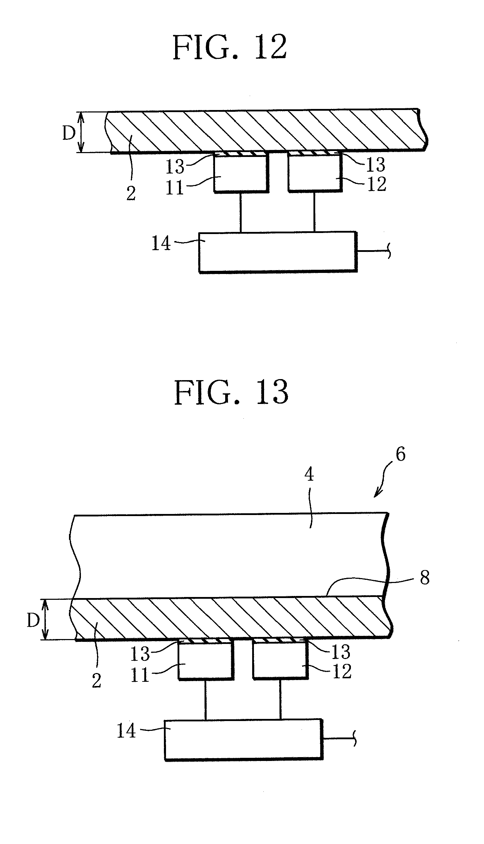

A schematic diagram of the interface inspection method performed in this example is shown in FIGS. 12 and 13. As shown in FIG. 12, unfilled bottom steel plate 2 not fill with concrete 4 was prepared. Also, as shown in FIG. 13, a composite slab 6 with the simulated void 9 not formed in the interface 8 was prepared as a comparative example. The composite slabs 6 prepared in this example were a composite slab 6 just after filled with fresh concrete 4 and a composite slab 6 left to stand for one hour after being filled with fresh concrete 4. In this example, a 5-mm-thick gel sheet was used as the contact medium 13. The bottom steel plate 2 was equal in thickness D to example 1 described above.

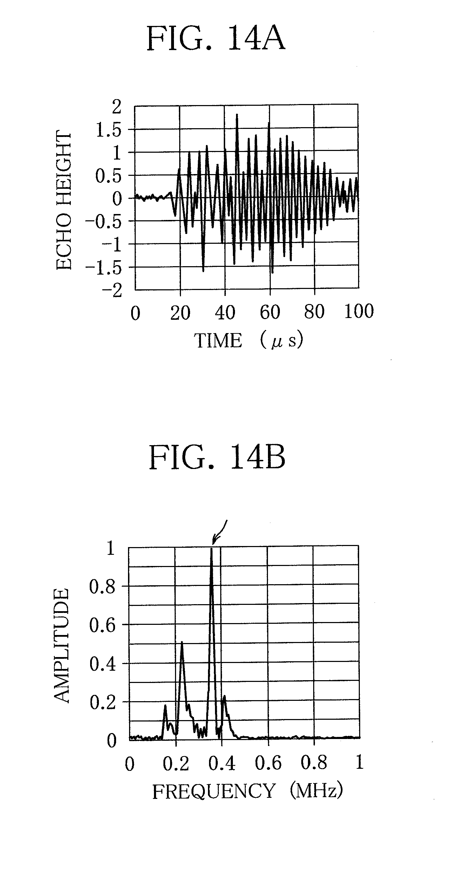

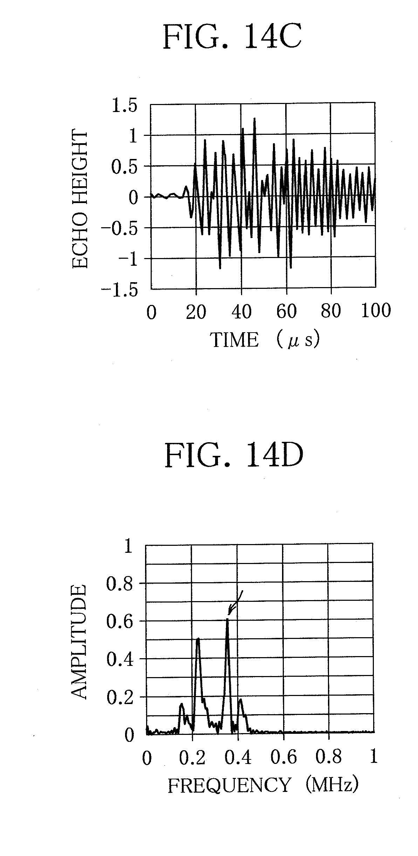

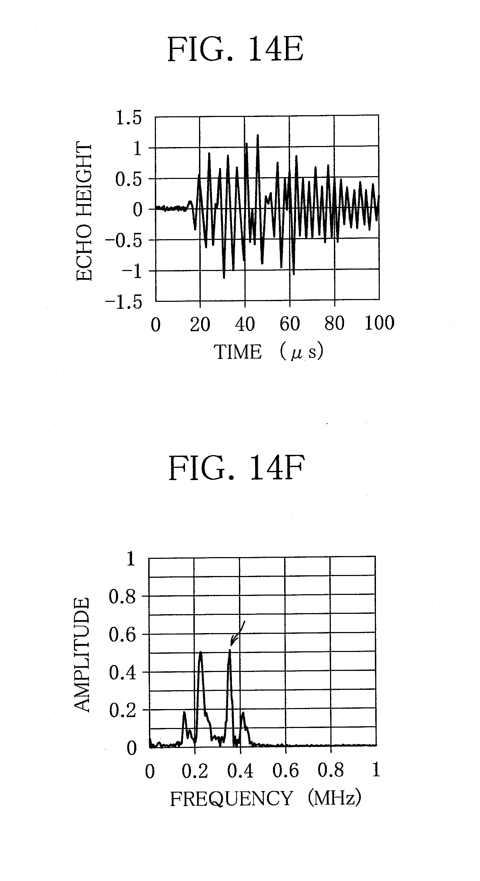

Results are shown in FIGS. 14A to 14F. FIG. 14A is a graph showing flaw detection results produced by performing ultrasonic flaw detection of the bottom steel plate 2 not filled with concrete using a gel sheet as the contact medium 13, FIG. 14B is a graph showing signal processing results of the flaw detection waveform of FIG. 14A, FIG. 14C is a graph showing flaw detection results produced by performing ultrasonic flaw detection of the bottom steel plate 2 using a gel sheet as the contact medium 13 just after the bottom steel plate 2 is filled with fresh concrete 4, FIG. 14D is a graph showing signal processing results of the flaw detection waveform of FIG. 14C, FIG. 14E is a graph showing flaw detection results produced by performing ultrasonic flaw detection of a bottom steel plate using a gel sheet as a contact medium 60 minutes after the bottom steel plate is filled with fresh concrete, and FIG. 14F is a graph showing signal processing results of the flaw detection waveform of FIG. 14E.

As shown in FIG. 14B, in the graph obtained by applying the interface inspection method of the present invention to the bottom steel plate 2 not filled with concrete 4, the amplitude is remarkably large in the frequency band range of 300 to 450 kHz. Also, as shown in FIGS. 14D and 14F, in the graphs showing results obtained by applying the interface inspection method of the present invention to a composite slab 6 in which no simulated void was formed, it can be seen that although an amplitude is observed in the frequency band range of 300 to 450 kHz, the amplitude is smaller than in FIG. 14B. These results indicate that even when a gel sheet is used as the contact medium 13, the filled condition of the interface 8 of the composite slab 6 can be assessed properly.

This concludes the description of the embodiment and examples, but the present invention is not limited to the embodiment and examples described above.

For example, although in the embodiment, an FFT-based frequency analysis is performed on the reflected wave received by the receiver probe 12, a bandpass filter (regardless of whether the bandpass filter is analog or digital) or wavelet transform may be applied instead of frequency analysis, where the bandpass filter passes only a specific frequency of a received signal waveform and the wavelet transform is a type of frequency analysis. The wavelet transform, in particular, is preferable because even after a received signal obtained by ultrasonic flaw detection is converted, time axis information remains in addition to frequency - amplitude characteristics, making it possible to use an analysis method for a sum, product, or the like of any desired components.

Furthermore, although in the embodiment, description has been given of how to determine the filled condition of the interface 8 using the interface inspection method, when it is determined in step S3 above that the filled condition of the interface 8 is insufficient, the concrete 4 may be compacted by installing a vibrator or the like at a flaw detection location on the bottom steel plate 2 and then the filled condition of the interface 8 may be inspected again using the interface inspection method described above. This allows a desired location of the interface 8 to be inspected easily. Also, since the condition of the interface 8 can be grasped before the concrete 4 hardens, eliminating the need to make repairs by making a hole in the steel plate after the concrete 4 hardens and filling concrete or the like into the void, it is possible to improve working efficiency.

Besides, in the examples described above, the interface inspection method of the present invention has been applied to check the interface 8 of fresh concrete 4, interface 8 of hardened concrete 4', and for trapped water in interface 8, this is not restrictive and the interface inspection method can be applied to check, for example, separation of laminated fiber-glass reinforced plastic layers. Also in cast molding which involves pouring rubber into a mold to cause the rubber to cure, the method can be applied to check the filled condition of an interface between rubber and mold, for example, to check for any cavity produced when the rubber is stagnant.

Explanation of Reference Signs

| 2 | Bottom steel plate |
|---|---|
| 4, 4' | Concrete |
| 8 | Interface |
| 10 | Interface inspection apparatus |
| 11 | Transmitter probe (a vibration generating unit) |
| 12 | Receiver probe (a receiving unit) |
| 18 | Arithmetic unit |
| 20 | Signal processing unit |

22     Determination unit

**Claims**

1. An interface inspection method for a composite structure, comprising the steps of:

   transmitting ultrasound to a composite structure to be inspected, via an ultrasound generating unit adapted to generate ultrasound of a frequency suitable for a member making up the composite structure and acquiring a signal waveform by receiving a reflected wave from the composite structure using a receiving unit;
   performing signal processing on the acquired signal waveform and acquiring signal amplitude versus frequency characteristics; and
   determining an interface condition of the composite structure based on an amplitude in a frequency band unique to the composite structure as observed on the signal waveform subjected to signal processing.

2. The interface inspection method for a composite structure according to claim 1, wherein in the step of performing signal processing, frequency analysis is performed on the acquired signal waveform.

3. The interface inspection method for a composite structure according to claim 1, wherein in the step of performing signal processing, the acquired signal waveform is processed by a bandpass filter to pass specific frequency components of the signal waveform.

4. The interface inspection method for a composite structure according to any one of claims 1 to 3, wherein the interface condition is a filling condition of fresh concrete in an interface of the composite structure made up of a steel plate and the fresh concrete.

5. The interface inspection method for a composite structure according to any one of claims 1 to 3, wherein the interface condition is a condition of trapped water in an interface of the composite structure made up of a steel plate and hardened concrete.

6. An interface inspection apparatus for a composite structure, comprising:

   an ultrasound generating unit configured to apply ultrasound to a composite structure to be inspected, the ultrasound having a frequency suitable for a member making up the composite structure;
   a receiving unit configured to receive a reflected wave from the composite structure and acquiring a signal waveform;

a signal processing unit configured to perform signal processing on the signal waveform received by the receiving unit and acquiring signal amplitude versus frequency characteristics; and

a determination unit configured to determine an interface condition of the composite structure based on an amplitude in a frequency band unique to the composite structure as observed on the signal waveform subjected to signal processing.

# FIG. 1

EP 2 889 613 A1

# FIG. 2

# FIG. 3

```
                    ┌──────────────┐
                    │    START     │
                    └──────┬───────┘
                           │
                           ▼
    S1 ┌──────────────────────────────────┐
       │       PERFORM FLAW               │
       │        DETECTION                 │
       └──────────────────┬───────────────┘
                          │
                          ▼
    S2 ┌──────────────────────────────────┐
       │    PERFORM FREQUENCY             │
       │      ANALYSIS OF                 │
       │   RECEIVED WAVEFORM             │
       └──────────────────┬───────────────┘
                          │
                          ▼
    S3        ◇ SIGNAL                    No
              STRENGTH    ──────────────────────┐
              OF RECEIVED                        │
              WAVEFORM<                          │
              THRESHOLD                          │
                  ?                              │
                  │ Yes                          │
                  ▼                              ▼
    S4 ┌──────────────────┐        ┌──────────────────┐ S5
       │      FILLED       │        │    UNFILLED      │
       └────────┬──────────┘        └────────┬─────────┘
                │                            │
                │◄───────────────────────────┘
                ▼
         ┌──────────────┐
         │   RETURN     │
         └──────────────┘
```

## FIG. 4A

## FIG. 4B

# FIG. 5

START

S11 — PERFORM FLAW DETECTION

S12 — PERFORM FREQUENCY ANALYSIS OF RECEIVED WAVEFORM

S13 — SIGNAL STRENGTH OF RECEIVED WAVEFORM < THRESHOLD ?

No

Yes

S14 — TRAPPED WATER PRESENT

S15 — TRAPPED WATER ABSENT

RETURN

# FIG. 6

# FIG. 7A

# FIG. 7B

# FIG. 8A

# FIG. 8B

# FIG. 9A

# FIG. 9B

# FIG. 9C

# FIG. 9D

# FIG. 10

# FIG. 11A

# FIG. 11B

# FIG. 11C

# FIG. 11D

# FIG. 12

# FIG. 13

# FIG. 14A

# FIG. 14B

# FIG. 14C

# FIG. 14D

# FIG. 14E

# FIG. 14F

## INTERNATIONAL SEARCH REPORT

| | International application No. |
|---|---|
| | PCT/JP2013/072117 |

**A. CLASSIFICATION OF SUBJECT MATTER**
*G01N29/04(2006.01)i*

According to International Patent Classification (IPC) or to both national classification and IPC

**B. FIELDS SEARCHED**

Minimum documentation searched (classification system followed by classification symbols)
G01N29/00-29/52

Documentation searched other than minimum documentation to the extent that such documents are included in the fields searched
Jitsuyo Shinan Koho         1922-1996   Jitsuyo Shinan Toroku Koho    1996-2013
Kokai Jitsuyo Shinan Koho   1971-2013   Toroku Jitsuyo Shinan Koho    1994-2013

Electronic data base consulted during the international search (name of data base and, where practicable, search terms used)
JSTPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 61-254850 A  (Bridgestone Corp.),<br>12 November 1986 (12.11.1986),<br>entire text; all drawings<br>(Family: none) | 1-3,6<br>4-5 |
| Y | Arisa YANAGIHARA et al., "Choonpa ni yoru Hagane Concrete Gosei Shoban no Concrete Mijuten Kenshutsu Gijutsu no Kaihatsu to Jikki eno Tekiyo Kento", Dai 7 Kai Dorokyo Shoban Symposium Ronbun Hokokushu, 21 June 2012 (21.06.2012), pages 155 to 160 | 4-5 |
| P,A | Arisa YANAGIHARA et al., "Development and Application of Non-Destructive Inspection for Steel-Concrete Composite Structures", Journal of IHI Technologies, 01 March 2013 (01.03.2013), vol.53, no.1, pages 47 to 53 | 1-6 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 November, 2013 (01.11.13) | 19 November, 2013 (19.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/072117 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 8-105864 A  (Non-Destructive Inspection Co., Ltd.), 23 April 1996 (23.04.1996), entire text; all drawings (Family: none) | 1-6 |
| A | Hajime IINO et al., "Concrete Filling Capacity and Quality Assurance Procedure Using Nondestructive Tests for Steel-Concrete Composite Slab (QS Slab)", Miyaji Giho, 2006, vol.21, pages 66 to 73 | 1-6 |
| A | Hiroki YOSHIO et al., "Seikeigata Hagane Type no Gosei Shoban no Concrete Jutensei Kakunin Hoho ni Kansuru Kosatsu", Proceedings of the 61st Annual Conference of the Japan Society of Civil Engineers, 2006.09, pages 115 to 116 | 1-6 |

Form PCT/ISA/210 (continuation of second sheet) (July 2009)

**EP 2 889 613 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3883466 B